# EUROPEAN PATENT SPECIFICATION

(11) **EP 4 202 416 B1**
(45) Date of publication and mention of the grant of the patent: **14.10.2026**
(21) Application number: 22213312.6
(22) Date of filing: 14.12.2022
(51) Int. Cl.: G01N 21/64, G01J 3/44, G01J 3/02

(54) **SPECTRUM ANALYSIS METHOD, DEVICE AND SYSTEM**
SPEKTRUMANALYSEVERFAHREN, -VORRICHTUNG UND -SYSTEM
PROCÉDÉ, DISPOSITIF ET SYSTÈME D'ANALYSE DE SPECTRE

(30) Priority: 22.12.2021 JP 2021208165
(43) Date of publication of application: 28.06.2023
(73) Proprietor: Hitachi High-Tech Corporation, Minato-ku Tokyo 105-6409 (JP)
(72) Inventor: HAYASHIDA, Junya, Tokyo 1008280 (JP); HATTORI, Hideharu, Tokyo 1008280 (JP); KAKISHITA, Yasuki, Tokyo 1008280 (JP)
(74) Representative: MERH-IP Matias Erny Reichl Hoffmann Patentanwälte PartG mbB

(56) References cited:
- JP-A- 2015 180 895
- US-A1- 2020 268 252
- HIGASHI HIROSHI ET AL: "Sparse regression for selecting fluorescence wavelengths for accurate prediction of food properties", CHEMOMETRICS AND INTELLIGENT LABORATORY SYSTEMS, ELSEVIER SCIENCE PUBLISHERS B.V. AMSTERDAM, NL, vol. 154, 17 March 2016 (2016-03-17), pages 29 - 37, XP029524083, ISSN: 0169-7439, DOI: 10.1016/J.CHEMOLAB.2016.03.008

## Description

### BACKGROUND OF THE INVENTION

### 1. Field of the Invention

The present invention relates to a spectrum analysis method, device, and system.

### 2. Description of Related Art

A spectrum analysis device obtains a spectrum by irradiating a sample with excitation light and measuring light detected from the sample. Among the spectrum analysis devices, there is a device that obtains a three-dimensional spectrum configured with three axes of an excitation wavelength, a detection wavelength, and a detection intensity. For example, a fluorescence spectrophotometer measures a three-dimensional fluorescence spectrum called an Excitation Emission Matrix (EEM). When a sample is irradiated with excitation light of a specific wavelength, the excited sample emits fluorescence of various wavelengths. This is called a fluorescence spectrum, and an intensity of fluorescence at each fluorescence wavelength is called fluorescence intensity. The sample emits different fluorescence spectra by changing the wavelength of excitation light. Therefore, by measuring the fluorescence spectrum while sequentially changing the wavelength of the excitation light, a three-dimensional spectrum having three axes of the excitation wavelength, fluorescence wavelength, and fluorescence intensity is obtained. The above-described detection wavelength corresponds to the fluorescence wavelength, and the detection intensity corresponds to the fluorescence intensity. By analyzing the shape of the obtained three-dimensional spectrum, it is possible to quantify components contained in the sample and to classify the sample into a type.

As a spectrum data analysis method in the related art, for example, there is a method of performing regression analysis by using only peak values in a three-dimensional spectrum.

In addition, JP2015-180895A (Patent Literature 1) discloses a method of providing a rectangular measurement window for an EEM and performing a multivariate analysis by using an integral value of a fluorescence intensity within the measurement window.

In addition, JP2018-013418A (Patent Literature 2) discloses a method of estimating the content of a target substance while limiting the excitation wavelength used for estimation by performing sparse estimation by using a light absorption characteristic value (detection intensity) at each of a plurality of the excitation wavelengths as an explanatory variable for two-dimensional spectrum data.

In addition, US 2020/268 252 A1 (Patent Literature 3) discloses a noninvasive sensing method of biological materials (i.e., skin cancer screening), wherein artificial intelligence or deep learning is applied to facilitate and to enhance medical analysis.

Eventually, the article titled "Sparse regression for selecting fluorescence wavelengths for accurate prediction of food properties" by Hiroshi et al (Non-Patent Literature 1) discloses a method for wavelength selection for nondestructive measurements using fluorescence spectra, wherein it is disclosed that sparse regression is able to contribute in better designing of the estimators for predicting different food properties.

### SUMMARY OF THE INVENTION

An object of linear regression using only a peak value is to perform short-time measurement and analysis by determining a wavelength band in which a peak appears, and after that, measuring and analyzing only the wavelength band. However, since information of only peaks is used, there are problems of difficulty in quantification/classification using spatial information such as a peak width and a distance between peaks, susceptibility to point-like noise, and the like. Hereinafter, in a spectrum analysis, a wavelength band used for quantification and/or classification will be referred to as an effective wavelength band.

In view of the above problem, in a technique described in Patent Literature 1, a rectangular measurement window is provided, and a multivariate analysis is performed by using an integrated value of a fluorescence intensity within the measurement window. Accordingly, an object is to reduce influence of noise while limiting the measurement wavelength band. However, searching is required by manually designing the measurement window, or constructing a regression equation from the fluorescence intensity within the randomly set measurement window and repeating a process of resetting the measurement window based on a quantification result. In some cases, it may be difficult to visually determine the effective wavelength band for the quantification/classification of an analysis target, and when randomly performing, the measurement window becomes large, so that it may be difficult to sufficiently limit the effective wavelength band. Therefore, in some cases, it may be difficult to construct a highly accurate quantification/classification model in a short time or to limit the effective wavelength band for realizing efficient measurement.

In a technique described in Patent Literature 2, a wavelength band effective for quantification/classification is automatically selected by performing sparse estimation by using all detection intensities in a two-dimensional spectrum data as explanatory variables. However, since the selected wavelength band is not a region but a point, similarly to the case of using the information of only peaks, there are problems in that it is difficult to extract spatial information and that it is susceptible to point-like noise.

In view of the above problems, an object of the invention is to provide a spectrum analysis device, method, and system that realize highly accurate quantification and/or classification with reduced influence of noise while utilizing the spatial information in three-dimensional spectrum data.

In order to achieve the above object, a spectrum analysis device and a spectrum analysis method as set out in the appended set of claims is provided. Preferable embodiments are defined in the dependent claims.

According to the invention, it is possible to provide a spectrum analysis device, method, and system that realizes highly accurate quantification and/or classification with reduced influence of noise and are capable of limiting wavelength band used for the quantification and/or classification in units of an excitation wavelength or a detection wavelength while utilizing spatial information in three-dimensional spectrum data. Problems, configurations, and effects other than those described above will be clarified by the following description of the embodiments.

### BRIEF DESCRIPTION OF THE DRAWINGS

FIG. 1 is a diagram illustrating an example of a hardware configuration of a spectrum analysis device according to a first embodiment useful for understanding the invention, but not covered by the claims;
FIG. 2 is a diagram illustrating an example of a functional block diagram of the spectrum analysis device according to the first embodiment;
FIG. 3 is a diagram illustrating an example of three-dimensional spectrum data;
FIG. 4A to 4D are diagrams illustrating an example of an input method to a wavelength-unit feature amount extraction unit;
FIG. 5 is a diagram illustrating an example of a process flow of a spectrum analysis method according to the first embodiment;
FIG. 6 is a diagram illustrating an example of a functional block diagram of a spectrum analysis device according to a third embodiment;
FIG. 7 is a diagram illustrating a display example of a relationship between quantification/classification accuracy and the number of effective wavelength bands;
FIG. 8 is a diagram illustrating a display example of the effective wavelength band;
FIG. 9 is a diagram illustrating an example of a process flow of a spectrum analysis method according to the third embodiment;
FIG. 10 is a diagram illustrating an example of a hardware configuration of a spectrum analysis system according to a fourth embodiment;
FIG. 11 is a diagram illustrating an example of a functional block diagram of a spectrum analysis device according to a second embodiment useful for understanding the invention, but not covered by the claims; and
FIG. 12 is a diagram illustrating an example of a process flow of a spectrum analysis method according to the second embodiment.

### DESCRIPTION OF EMBODIMENTS

Hereinafter, embodiments of spectrum analysis methods, devices, and systems according to the invention or useful for understanding the invention will be described with reference to the accompanying drawings. In the following description and accompanying drawings, components having the same functional configuration are denoted by the same reference numerals, and redundant description thereof will be omitted.

### [First Embodiment]

### <Hardware Configuration of Spectrum Analysis Device>

In a first embodiment, described is a spectrum analysis device that is capable of performing quantification/classification with reduced influence of noise and limiting wavelength band (effective wavelength band) used for the quantification/classification in units of an excitation wavelength or a detection wavelength while utilizing spatial information in three-dimensional spectrum data.

It is noted that the three-dimensional spectrum data in this embodiment is data that includes a plurality of excitation wavelengths and spectroscopic spectra (spectra configured with detection wavelengths and detection intensities) and is discretized with a predetermined wavelength width.

Further, the quantification/classification is referred to as quantification and/or classification, and the quantification/classification model is a model for data estimation used for at least one of the quantification and the classification.

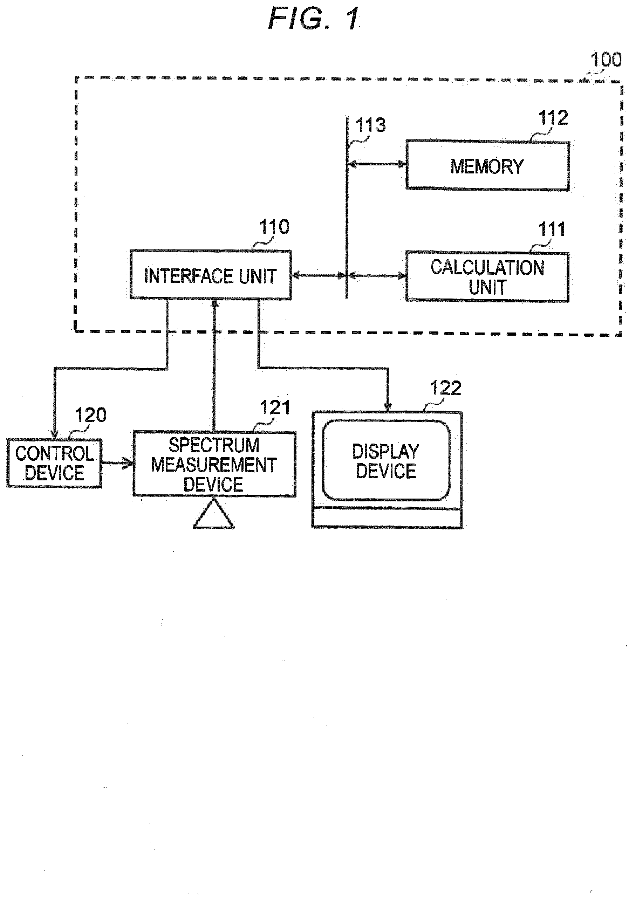

A hardware configuration of the spectrum analysis device according to the first embodiment will be described with reference to FIG. 1. A spectrum analysis device 100 includes an interface unit 110, a calculation unit 111, a memory 112, and a bus 113, and the interface unit 110, the calculation unit 111, and the memory 112 transmit and receive information via the bus 113.

Each component of the spectrum analysis device 100 will be described.

The interface unit 110 is a communication device that transmits and receives signals to and from a device outside the spectrum analysis device 100. As a device that performs transmission and reception with the interface unit 110, there are a control device 120 that controls a spectrum measurement device 121, the spectrum measurement device 121 that measures the three-dimensional spectrum data, and a display device 122 such as a monitor or a printer that displays the process result of the spectrum analysis device 100.

The calculation unit 111 is a device that executes various processes in the spectrum analysis device 100 and is, for example, a CPU (Central Processing Unit), an FPGA (Field-Programmable Gate Array), or the like. Functions executed by the calculation unit 111 will be described later.

The memory 112 is a device that stores programs executed by the calculation unit 111, parameters of the quantification/classification model, a process result, and the like, and may be an HDD, an SSD, a RAM, a ROM, a flash memory, or the like.

### <Functional Configuration of Spectrum Analysis Device 100>

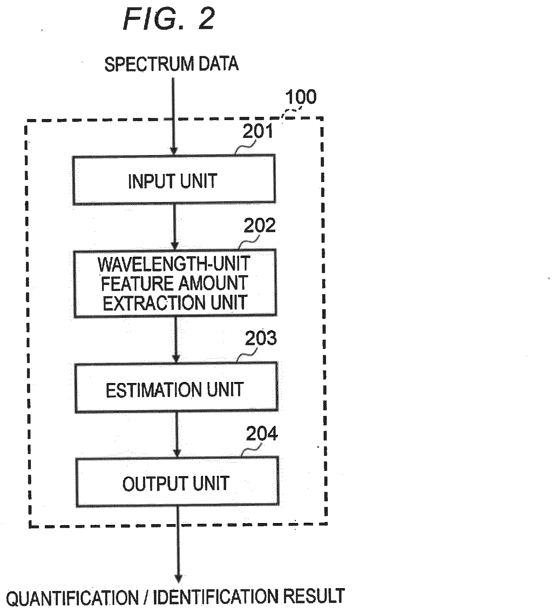

FIG. 2 is an example of a functional block diagram according to an embodiment of the spectrum analysis device 100. Each of these functional units may be realized by software that operates on the calculation unit 111 or may be realized by dedicated hardware.

The spectrum analysis device 100 includes an input unit 201, a wavelength-unit feature amount extraction unit 202, an estimation unit 203, and an output unit 204 as functional units. Hereinafter, each functional unit will be described.

The input unit 201 receives the one or more discretized three-dimensional spectrum data input from the interface unit 110.

The wavelength-unit feature amount extraction unit 202 extracts the feature amount from the detection intensities of two or more detection wavelength bands in each excitation wavelength band or from the detection intensities of two or more excitation wavelength bands in each detection wavelength band from the three-dimensional spectrum data.

The estimation unit 203 reads one of the quantification/classification models stored in the memory 112 and performs quantification/classification based on the feature amount.

The output unit 204 outputs the quantification/classification result. In a case of the quantification, in addition to the estimated quantification result of each sample, the evaluation value of the quantification model such as a coefficient of determination and an RMSE (Root Mean Squared Error) may be output, and a graph data such as a calibration curve may be output. In a case of the classification, in addition to the estimated classification result of each sample, evaluation values of the classification model such as an classification rate, an accuracy rate, and a reproduction rate may be output. These outputs are displayed on the display device 122 through the interface unit 110.

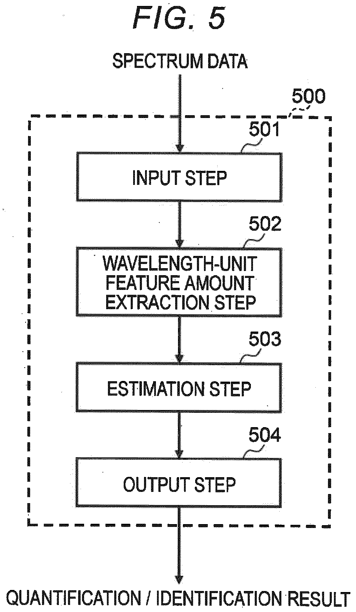

It is noted that each of the functions described above does not need to be configured according to the functional units illustrated in FIG. 2, as long as the process corresponding to the operation of each functional block can be realized. FIG. 5 illustrates an example of a process flowchart according to the first embodiment. Each step corresponds to each element in the functional block diagram illustrated in FIG. 2.

In an input step 501, the one or more discretized three-dimensional spectrum data input from the interface unit 110 is received.

In a wavelength-unit feature amount extraction step 502, the feature amount is extracted from the detection intensities of two or more detection wavelength bands in each excitation wavelength band or from the detection intensities of two or more excitation wavelength bands in each detection wavelength band from the three-dimensional spectrum data.

In an estimation step 503, one of the quantification/classification models stored in the memory 112 is read, and the quantification/classification is performed based on the feature amount.

In an output step 504, the quantification/classification result is output. In a case of the quantification, in addition to the estimated quantification result of each sample, the evaluation value of the quantification model such as a coefficient of determination and an RMSE (Root Mean Squared Error) may be output, and a graph data such as a calibration curve may be output. In a case of the classification, in addition to the estimated classification result of each sample, evaluation values of the classification model such as an classification rate, an accuracy rate, and a reproduction rate may be output.

Hereinafter, detailed operations will be described with each functional unit as the subject, but each step corresponding to each functional unit may be read as the subject.

### <Configuration and Operation Of Each Component>

Hereinafter, the operations of the input unit 201, the wavelength-unit feature amount extraction unit 202, and the estimation unit 203 among the functional units will be described in detail.

The input unit 201 receives the discretized three-dimensional spectrum data through the interface unit 110 and stores the discretized three-dimensional spectrum data in the memory 112.

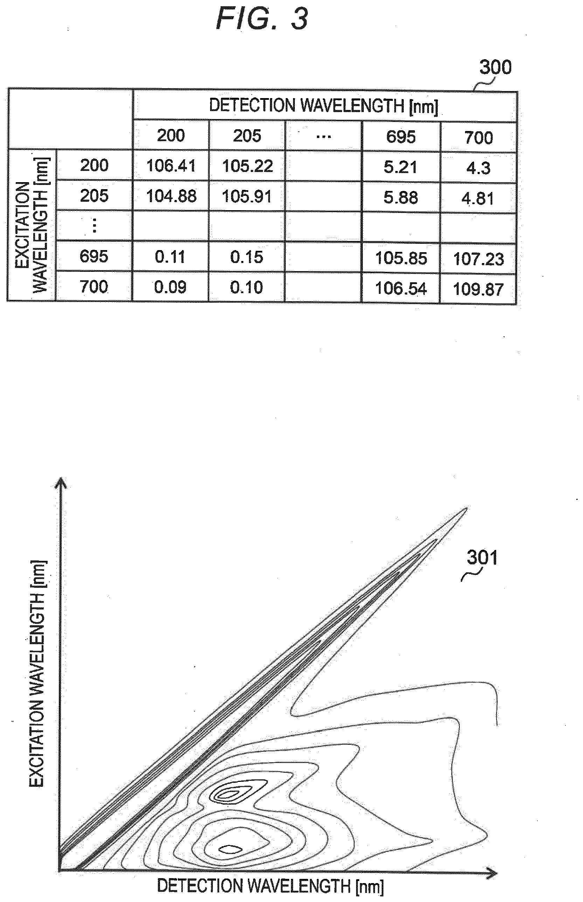

FIG. 3 illustrates an example of Excitation Emission Matrix (EEM) data. Discretized Excitation Emission Matrix (EEM) data 300 is an example of discretized and stored EEM data. An EEM data visualization example 301 is an example in which the excitation light wavelength is plotted on the vertical axis and the detection wavelength is plotted on the horizontal axis, and the detection intensity in each combination of the excitation wavelength and the detection wavelength is displayed as a contour line data. As illustrated in the discretized EEM data 300, the EEM data is discretized to be measured and recorded. The discretized EEM data 300 indicates an example of measuring the excitation light/detection light of 200 nm to 700 nm at intervals of 5 nm. For example, the detection intensity of the detection light of 200 nm with respect to the excitation light of 200 nm is recorded in the first row and the first column of the discretized EEM data 300, the detection intensity of the detection light of 205 nm with respect to the excitation light of 200 nm is recorded in the first row and the second column, and the detection intensity of the detection light of 200 nm with respect to the excitation light of 205 nm is recorded in the second row and the first column, respectively. In addition, since 500 nm is recorded at intervals of 5 nm, the number of columns and the number of rows of the discretized EEM data 300 are 100×100.

The EEM data visualization example 301 is an example in which the discretized EEM data 300 is converted into a two-dimensional image as the contour line data, and when a person observes the EEM data, in many cases, the EEM data is confirmed by a display such as the EEM data visualization example 301. It is noted that, in addition to the contour line data, in some cases, the EEM data is displayed by gray images and heat map images in which detection intensities are assigned to luminance values and colors, a bird's-eye view, or the like.
The shape of the EEM differs depending on properties of the sample to be measured, and thus, the classification of the sample, the quantification of a specific component, and the like are performed based on a difference of the shapes.

The wavelength-unit feature amount extraction unit 202 extracts the feature amount from the detection intensities of two or more detection wavelength bands in each excitation wavelength band or from the detection intensities of two or more excitation wavelength bands in each detection wavelength band from the three-dimensional spectrum data. Accordingly, the wavelengths effective for classification and quantification in units of an excitation wavelength or a detection wavelength can be selected and limited while extracting a spatial feature amount in the detection wavelength direction or the excitation wavelength direction.

The advantages of the method disclosed in this embodiment will be described in comparison with two reference methods. A first reference method is a method of performing regression by using each detection intensity, that is, the value of each square of the discretized EEM data 300 as the explanatory variable. In the first reference method, the regression equation is constructed by assigning a large weight to the detection intensity in combinations of the excitation wavelengths and the detection wavelengths that are effective for the classification and the quantification, among the detection intensities. In the classification and the quantification after the construction of the regression equation, the measurement time is shortened by measuring the explanatory variable assigned with a large weight, that is, only the combination of the excitation wavelength and the detection wavelength. However, it is difficult to extract the spatial feature amount such as the width of a peak component, and there is also a problem that point-like noise directly affects the classification and the quantification.

A second reference method is a method of extracting the spatial feature amounts by using a CNN (Convolutional Neural Network). The CNN is one of the machine learning methods frequently used in the field of image processing, and extracts the feature amount by automatically learning a plurality of filters. By using the CNN, the spatial feature amount can be extracted, and robustness against point-like noise is also improved. However, in general, since the CNN calculates the feature amount comprehensively from the entire two-dimensional data, that is, from the values of all squares in the discretized EEM data 300, there is a tendency to require the detection intensities in a wide range of wavelength bands in order to calculate the feature amount, and it may be difficult to limit the effective wavelength band.

In contrast to these reference methods, in the method disclosed in this embodiment, the feature amount extraction is performed independently from the excitation wavelength, that is, each row of the discretized EEM data 300 or from the detection wavelength, that is, each column of the discretized EEM data 300. Accordingly, the feature amount having spatial information in the detection wavelength direction or the excitation wavelength direction and robust against point-like noise can be extracted, and the effective wavelength band can be selected and limited in units of an excitation wavelength or a detection wavelength.

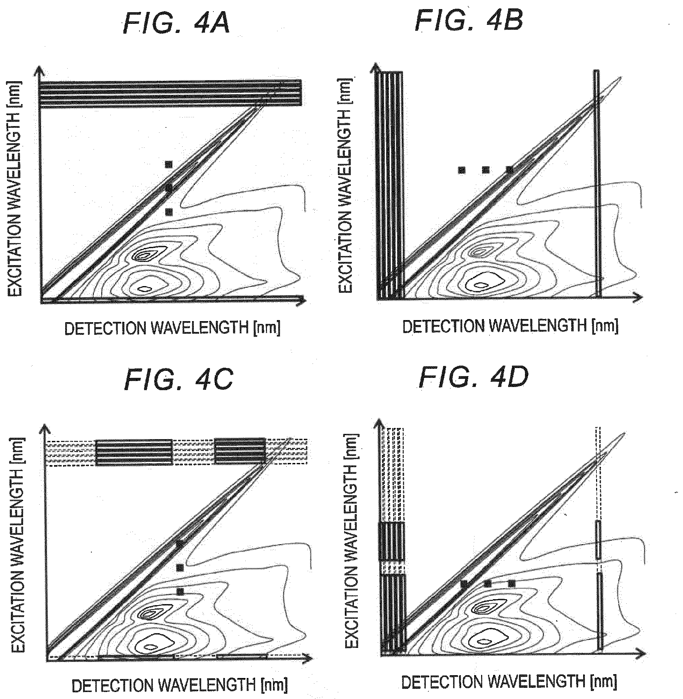

FIG. 4A to 4D are diagrams illustrating an example of a feature amount extraction range. FIG. 4A illustrates an example of extracting the feature amount from all detection wavelength bands in each excitation wavelength band, FIG. 4B illustrates an example of extracting the feature amount from all excitation wavelength bands in each detection wavelength band, FIG. 4C illustrates an example of extracting the feature amount from a portion of the detection wavelength band in each excitation wavelength band, and FIG. 4D illustrates an example of extracting the feature amount from a portion of the excitation wavelength band in each detection wavelength band. Rectangles drawn in the three-dimensional spectrum data of FIGS. 4A, 4B, 4C, and 4D indicate input units to the feature amount extraction model for extracting the feature amount. The wavelength-unit feature amount extraction unit 202 extracts the feature amount independently for each excitation wavelength band as illustrated in FIGS. 4A and 4C or for each detection wavelength band as illustrated in FIGS. 4B and 4D. At this time, as illustrated in FIGS. 4A and 4B, the feature amount may be extracted from the entire detection or excitation wavelength band, and as illustrated in FIGS. 4C and 4D, the feature amount may be extracted from only a portion of the detection or excitation wavelength band.

In addition, in FIGS. 4A and 4C, all of the excitation wavelengths are illustrated so as to extract the feature amount from the same detection wavelength, but the detection wavelength band for extracting the feature amount may be changed according to the excitation wavelength. For example, with respect to the EEM, noise called scattered light is measured around a region where the excitation wavelength and the detection wavelength are the same, but the region from which the feature amount is extracted may be changed according to the excitation wavelength so as to avoid this region of the scattered light. It is noted that the same applies when the detection wavelength and the excitation wavelength are exchanged.

As a feature amount extraction method, 1DCNN (1 Dimensional Convolutional Neural Network) is used. The 1DCNN is a CNN for one-dimensional data and extracts a plurality of the feature amounts for each excitation wavelength or each detection wavelength. For example, as the feature amount learning method, there is a method of learning the feature amount by updating the 1DCNN and the fully connected layer by a machine learning method by connecting one or more 1DCNN for extracting the feature amount and the fully connected layer and the like that performs the quantification and the classification with the output of 1DCNN as an input and using a data set generated for each quantification and classification problem. The feature amount learning method is not limited to this, and may be a method of learning a common feature amount by learning a plurality of tasks simultaneously, or may be learned by using an unsupervised learning method such as Auto Encoder. Outside scope of the claimed invention, a handcrafted feature amount such as HoG (Histograms of Oriented Gradients) and a Haarlike feature amount may be used, and a statistical analysis method such as a principal component analysis and PLS (Partial Least Squares) may also be used.

The wavelength-unit feature amount extraction unit 202 extracts the information on the region (detection intensities measured at two or more wavelengths) as illustrated in FIGS. 4A to 4D, so that it is also possible to provide the quantification/classification model with improved robustness to noise while utilizing the spatial information in the estimation unit 203 described later. In addition, as illustrated in FIGS. 4A to 4D, the feature amount is extracted independently for each excitation wavelength or each detection wavelength, and in the estimation unit 203, each feature amount is used as an input of the quantification/classification, so that the quantification/classification model capable of limiting the effective wavelength band can be provided.

The estimation unit 203 performs quantification/classification by reading any quantification/classification model stored in the memory 112, and inputting the feature amount obtained by the wavelength-unit feature amount extraction unit 202 into the quantification/classification model.

For the quantification/classification model, a sparse estimation model such as Lasso regression, Elastic Net, and Group Lasso may be used, and a machine learning model such as Neural Network, Random Forest, and Support Vector Machine may also be used. Herein, an example using the Lasso regression will be described.

In the Lasso regression, the estimation is performed based on the regression equation such as Equation 1. Herein, xᵢⱼ is a wavelength band unit feature amount output from the wavelength-unit feature amount extraction unit 202, i is an index of the excitation or detection wavelength, and j is an index of the feature amount. It is noted that it is assumed that the number of excitation or detection wavelengths (that is, the number of rows or the number of columns in the discretized EEM data 300) is N, and the number of feature amounts extracted from each wavelength is M. wᵢⱼ indicates the weight for each feature amount, b indicates the bias value, and y^ indicates the output of the regression model. [Equation 1] $\hat{y} = {w}_{11} {x}_{11} + {w}_{12} {x}_{12} + ⋯ + {w}_{NM} {x}_{NM} + b$

In order to optimize wᵢⱼ, the regression equation such as Equation 2a is configured by using one or more sets of training feature amounts and supervised signals. Herein, x_{s,ij} indicates the feature amount output by the wavelength-unit feature amount extraction unit 202, s indicates the index of the sample, and i and j indicate the index of the excitation or detection wavelength and the index of the feature amount similarly to Equation 1. In addition, yₛ indicates a supervised signal of the sample s. It is noted that it is assumed that the number of sets of the training feature amounts and the supervised signals is S. Equation 2b is an equation in which the notation of matrix vectors in Equation 2a is omitted. [Equation 2a] $\left(\begin{matrix}{y}_{1} \\ {y}_{2} \\ ⋮ \\ {y}_{s}\end{matrix}\right) = \left(\begin{matrix}{x}_{1,11} & {x}_{1,12} & ⋯ & {x}_{1 , NM} \\ {x}_{2,11} & {x}_{2,12} & ⋯ & {x}_{2 , NM} \\ ⋮ & ⋮ & ⋱ & ⋮ \\ {x}_{S , 11} & {x}_{S , 12} & ⋯ & {x}_{S , NM}\end{matrix}\right) \left(\begin{matrix}{w}_{11} \\ {w}_{12} \\ ⋮ \\ {w}_{NM}\end{matrix}\right) + \left(\begin{matrix}b \\ b \\ ⋮ \\ b\end{matrix}\right)$ [Equation 2b] $y = Xw + b$

Optimization of w is performed on the regression equation of Equation 2b based on Equation 3 below. Herein, α indicates the regularization strength. The first term of Equation 3 has the effect of bringing the output of the regression model closer to the supervised signal y. The second term is an L1 regularization term, which has the effect of allowing many elements in the weight w to be closer to 0. The strength of the effect is determined by the regularization strength α. [Equation 3] $argmin {\left‖Xw+b-y\right‖}_{2}^{2} + α {\left‖w\right‖}_{{1}^{w , b}}$

By constructing the regression equation by the Lasso analysis as described above, the weight w related to some feature amounts becomes zero. When weights wᵢ₁, ..., w_{iM} corresponding to all feature amounts for wavelength band i become 0, since this denotes that the feature amount obtained from the wavelength band i is not used in the regression, there is no need to measure the wavelength band i. In this manner, by limiting the feature amounts used in the regression in units of a wavelength band, the measurement time can be shortened.

The weight w constructed by the above method is stored in advance in the memory 112, and when the spectrum analysis device 100 is activated or when the weight w is updated, the estimation unit 203 reads the weight w and executes a quantification/classification process.

As described above, it is possible to provide a spectrum analysis device and method capable of performing highly accurate quantification/classification with reduced influence of noise and limiting the wavelength band used in the quantification/classification in units of an excitation wavelength or a detection wavelength while utilizing the spatial information in the spectrum data with the wavelength-unit feature amount extraction unit 202 extracting the feature amount from the detection intensities of the two or more detection wavelengths at each excitation wavelength or from the detection intensities of the two or more excitation wavelengths at each detection wavelength and with the estimation unit 203 performing the quantification/classification by using the feature amount as the explanatory variable.

### [Second Embodiment]

In a second embodiment, a spectrum analysis device capable of performing highly accurate classification and selection of the effective wavelength band for a quantification/classification problem uniquely set by the user by adding the quantification/classification model generation function to the spectrum analysis device described in the first embodiment will be described.

### <Hardware Configuration of Spectrum Analysis Device>

Since a hardware configuration of the spectrum analysis device according to the second embodiment is the same as the hardware configuration of the spectrum analysis device according to the first embodiment illustrated in FIG. 1, and thus, description thereof will be omitted.

### <Functional Configuration of Spectrum Analysis Device>

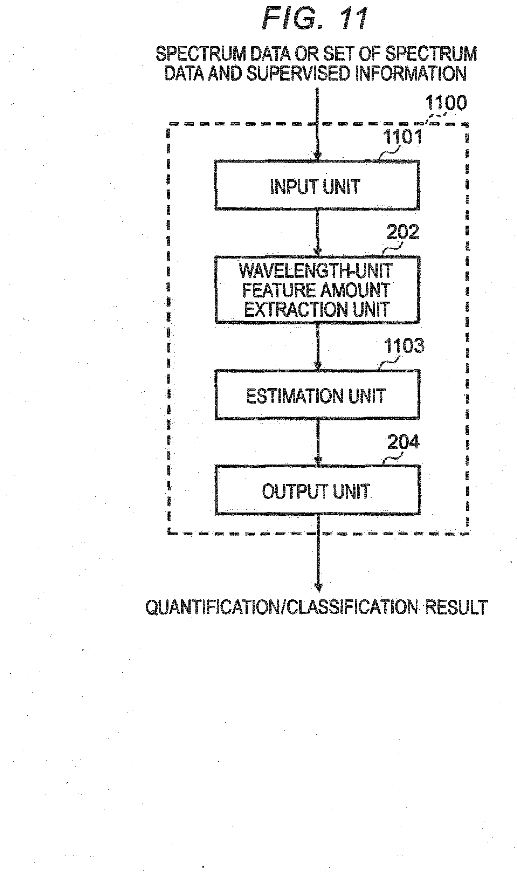

FIG. 11 is an example of a functional block diagram of the spectrum analysis device according to the second embodiment.

A spectrum analysis device 1100 includes an input unit 1101, a wavelength-unit feature amount extraction unit 202, an estimation unit 1103, and an output unit 204 as functional units. Since the wavelength-unit feature amount extraction unit 202 and the output unit 204 are the same as those in the first embodiment, description thereof will be omitted. Hereinafter, the input unit 1101 and the estimation unit 1103 will be described.

The input unit 1101 receives the three-dimensional spectrum data alone or a set of the three-dimensional spectrum data and supervised information through the interface unit 110.

The estimation unit 1103 generates the quantification/classification model by using a plurality of sets of the three-dimensional spectrum data and the supervised information stored in the memory 112.

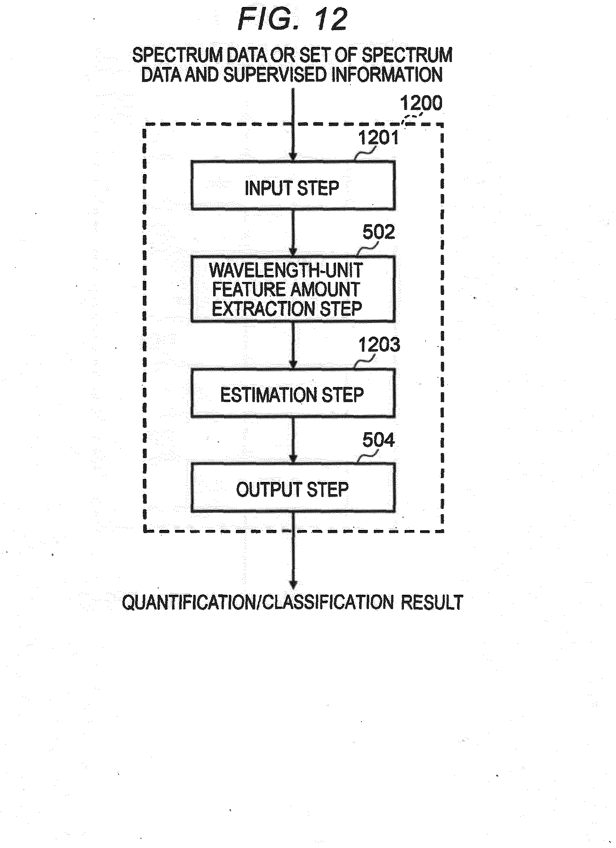

It is noted that each of the above functions does not need to be configured according to the functional units illustrated in FIG. 11, as long as the process corresponding to the operation of each functional block can be realized. FIG. 12 illustrates an example of a process flowchart according to the second embodiment. Each step corresponds to each element in the functional block diagram illustrated in FIG. 11.

The wavelength-unit feature amount extraction step 502 and the output step 504 in FIG. 12 are the same as the steps described in the first embodiment, and thus, description thereof will be omitted.

In an input step 1201, the three-dimensional spectrum data alone or a set of the three-dimensional spectrum data and the supervised information is received through the interface unit 110.

In an estimation step 1203, a plurality of sets of the three-dimensional spectrum data and the supervised information stored in the memory 112 are used to generate the quantification/classification model.

Hereinafter, detailed operations will be described with each functional unit as the subject, but each step corresponding to each functional unit may be read as the subject.

### <Configuration and Operation of Each Component>

The operations of the input unit 1101 and the estimation unit 1103 will be described in detail.

The input unit 1101 receives the three-dimensional spectrum data alone or a set of the three-dimensional spectrum data and the supervised information through the interface unit 110. In a case of receiving the three-dimensional spectrum data alone, the input unit 1101 performs the same process as the input unit 201 described in the first embodiment. In a case of receiving a set of the three-dimensional spectrum data and the supervised information, the input unit 1101 stores the received set of the three-dimensional spectrum data and the supervised information in the memory 112.

In a case where a certain condition is satisfied, the estimation unit 1103 generates the quantification/classification model by using a plurality of sets of the three-dimensional spectrum data and the supervised information stored in the memory 112. The conditions for starting the generation of the quantification/classification model may be a case where the number of sets of the three-dimensional spectrum data and the supervised information newly stored in the memory 112 exceeds a predetermined number, a case where there is a request from the user through the interface unit 110, a case where the quantification/classification model is updated whenever a predetermined time elapses, or the like.

As described in the first embodiment, the sparse estimation model such as Lasso regression, Elastic Net, or Group Lasso may be used as the quantification/classification model, and the machine learning model such as Neural Network, Random Forest, or Support Vector Machine may also be used as the quantification/classification model. Herein, an example using the Lasso regression will be described as an example.

As described in the first embodiment, the Lasso regression constructs the regression equation expressed in Equation 2b and derives the weight w based on the constraints expressed in Equation 3. Herein, by using three-dimensional spectrum data group as X and using a supervised information group corresponding thereto as y, among the plurality of sets of the three-dimensional spectrum data and the supervised information described above, the weight w that satisfies Equation 3 is derived. ISTA (Iterative Shrinkage Thresholding Algorithm) or the like, which is one of Lasso regression solution methods is used to derive the weight. Accordingly, the quantification/classification models can be constructed by using data sets collected uniquely by the user. In addition, even in a case of using other sparse estimation model or regression model, the quantification/classification model can be constructed by a similar method. In addition, in a case of using the machine learning model, the quantification/classification model is learned according to each machine learning algorithm by using the three-dimensional spectrum data group and the supervised information group corresponding thereto. It is noted that the initial value of the weight of the quantification/classification model may be set to a fixed value or a random value, the initial value of the weight may be set according to a probability distribution such as a normal distribution, and the weight of the quantification/classification model stored in the memory 112 may be set.

It is noted that, in the wavelength-unit feature amount extraction unit 202, in a case of using the machine learning method such as Neural Network or the statistical analysis method such as a principal component analysis or PLS as the feature amount extraction model, in addition to the quantification/classification model, the feature amount extraction model may be updated by using a plurality of the three-dimensional spectrum data or a plurality of the sets of the three-dimensional spectrum data and the supervised information described above.

For example, in a case of using an Auto Encoder which is a type of machine learning method or a principal component analysis which is a type of the statistical analysis method, the supervised information is not required to update the feature amount extraction model. Therefore, the feature amount is updated by unsupervised learning or a statistical analysis by using only a plurality of the three-dimensional spectrum data. Further, for example, in a case of using 1DCNN, which is a type of the machine learning method described in the first embodiment or PLS which is a type of the statistical analysis method, the feature amount extraction model is updated by executing supervised learning by using a plurality of sets of the three-dimensional spectrum data and the supervised signals or the statistical analysis by using the supervised information as a response variable.

According to the above configuration, the quantification/classification model can be constructed by using the data set independently collected by the user, and thus, a spectrum analysis device and method capable of performing highly accurate classification and selection of the effective wavelength band for the quantification/classification problem uniquely set by the user can be provided.

### [Third Embodiment]

In a third embodiment, a spectrum analysis device where a function of automatically determining an effective wavelength band or a function of supporting the user in determining the effective wavelength band is added to the spectrum analysis device 100 described in the second embodiment will be described.

### <Hardware Configuration of Spectrum Analysis Device>

A hardware configuration of the spectrum analysis device according to the third embodiment is the same as the hardware configuration of the spectrum analysis device according to the first embodiment illustrated in FIG. 1, and thus, description thereof will be omitted.

### <Functional Configuration of Spectrum Analysis Device>

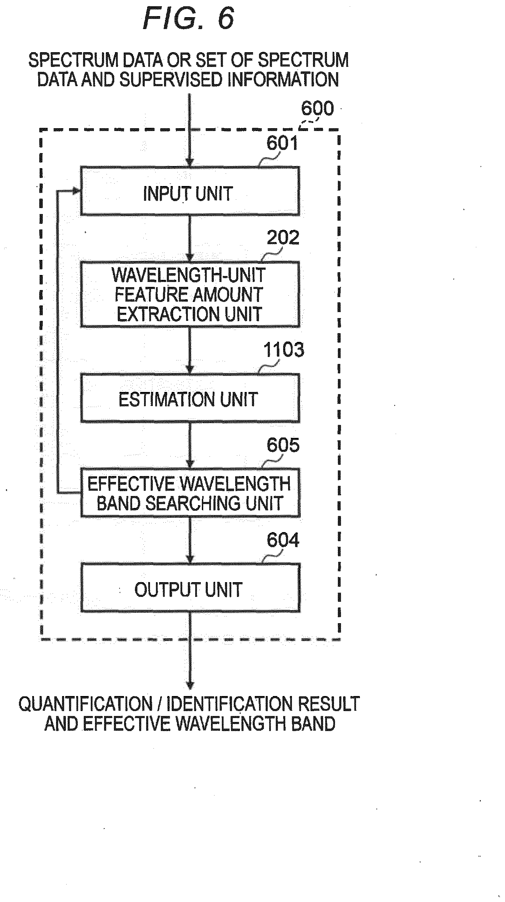

FIG. 6 is an example of a functional block diagram of the spectrum analysis device according to the third embodiment.

A spectrum analysis device 600 includes an input unit 601, a wavelength-unit feature amount extraction unit 202, an estimation unit 1103, an output unit 604, and an effective wavelength band searching unit 605 as functional units. The wavelength-unit feature amount extraction unit 202 is the same as that of the first embodiment, and the estimation unit 1103 is the same as that of the second embodiment, and thus, description thereof will be omitted. Hereinafter, the input unit 601, the effective wavelength band searching unit 605, and the output unit 604 will be described.

The input unit 601 receives the three-dimensional spectrum data alone or a set of the three-dimensional spectrum data and the supervised information through the interface unit 110 similarly to the input unit 1101 described in the second embodiment. Further, the effective wavelength band is received from the effective wavelength band searching unit 605 described later and the spectrum data to be output to the wavelength-unit feature amount extraction unit 202 is processed. The effective wavelength band searching unit 605 automatically determines the effective wavelength band or supports the user in determining the effective wavelength band based on the weight of the quantification/classification model constructed by the estimation unit 1103.

The output unit 604 displays the effective wavelength band determined by the effective wavelength band searching unit 605 together with the quantification/classification result and outputs information for supporting the user to determine the effective wavelength band if necessary.

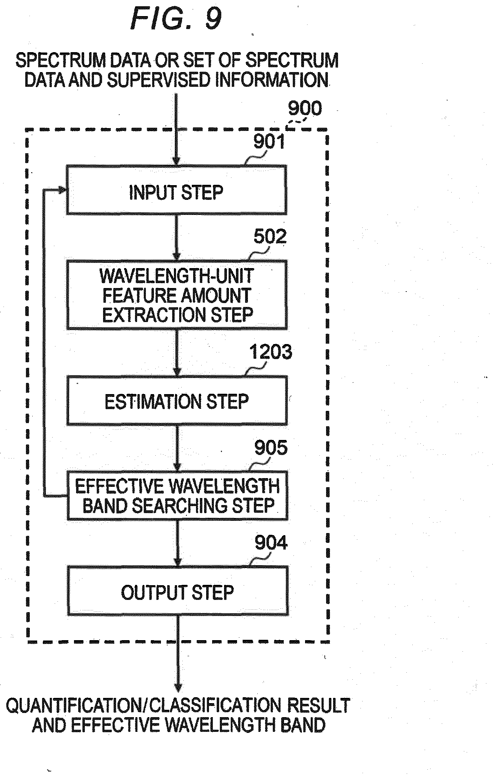

It is noted that each of the functions described above does not need to be configured according to the functional units in FIG. 6 as long as the process that realizes the operation of each functional block can be realized. FIG. 9 illustrates an example of a process flowchart according to the third embodiment. Each step corresponds to each element in the functional block diagram illustrated in FIG. 6.

The wavelength-unit feature amount extraction step 502 illustrated in FIG. 9 is the same as that of the first embodiment, and the estimation step 1203 is the same as that of the second embodiment, and thus, description thereof will be omitted.

In input step 901, the three-dimensional spectrum data alone or a set of the three-dimensional spectrum data and the supervised information is received through the interface unit 110 similarly to the input step 1201 described in the second embodiment. Further, the effective wavelength band is received from an effective wavelength band searching step 905 described later, and the spectrum data to be output to the wavelength-unit feature amount extraction step 502 is processed.

In the effective wavelength band searching step 905, based on the weight of the quantification/classification model constructed in the estimation step 1203, the effective wavelength band is automatically determined, or the user is supported in the determining the effective wavelength band.

In an output step 904, the effective wavelength band determined in the effective wavelength band searching step 905 is displayed together with the quantification/classification result, and the information for supporting the user to determine the effective wavelength band is output, if necessary.

Hereinafter, detailed operations will be described with each functional unit as the subject, but each step corresponding to each functional unit may be read as the subject.

### <Configuration and Operation of Each Component>

The input unit 601 receives the three-dimensional spectrum data alone or a set of the three-dimensional spectrum data and the supervised information through the interface unit 110 and performs the same process as the input unit 1101 described in the second embodiment. In addition, by receiving the effective wavelength band information output by the effective wavelength band searching unit 605 and by inputting only the spectrum data corresponding to the effective wavelength band to the wavelength-unit feature amount extraction unit 202 from the three-dimensional spectrum data, the feature amount extraction time may be shortened.

The effective wavelength band searching unit 605 automatically determines the effective wavelength band in units of an excitation wavelength or a detection wavelength based on the weight of the quantification/classification model constructed by the estimation unit 1103 and outputs the effective wavelength band or displays the information for supporting the determination of the effective wavelength band by the user on the display device 122 through the output unit 604 and the interface unit 110.

First, the method of automatically determining the effective wavelength band will be described. In the estimation unit 1103, as described in the second embodiment, the quantification/classification model is constructed by using the sparse estimation model such as Lasso regression, Elastic Net, or Group Lasso or the machine learning model such as Neural Network, Random Forest, or Support Vector Machine. For example, in a case of using the sparse estimation method such as Lasso regression, Elastic Net, or Group Lasso, since there is a feature that the value of the coefficient multiplied by a plurality of explanatory variables (feature amounts) is 0, the excitation or detection wavelength band in which the feature amount corresponding to the coefficient that is not 0 is extracted becomes the wavelength band used for quantification/classification. Therefore, the effective wavelength band searching unit 605 receives the value of the weight of the quantification/classification model constructed by the estimation unit 1103 and determines the effective wavelength band based on the value of the weight. For example, in a case of using the Lasso regression as the quantification/classification model, the values of w₁₁, w₁₂, ···, wₙₘ in Equation 1 are received, in a case where at least one of the weights wᵢ₀, ···, wᵢₘ corresponding to the feature amount extracted from the wavelength i has a value other than 0, the wavelength i is used as the effective wavelength band, and all the weights wᵢ₀, ···, wᵢₘ are 0, the wavelength i is excluded from the effective wavelength band. In addition, in a case where a determination tree such as random forest or gradient boosting is used, an arbitrary number of explanatory variables are selected in descending order of importance, and wavelengths corresponding to the explanatory variables are selected as the effective wavelength bands.

A method of automatically determining a hyperparameter and the like for controlling sparseness will also be described. For example, in the Lasso regression, the number of feature amounts that is 0 is changed according to the value of the regularization strength α described above. As the value of α is increased, the number of feature amounts that is 0 is increased, and thus, the number of effective wavelength bands can be reduced, but since the number of feature amounts used for the classification is reduced, the quantification/classification accuracy tends to be decreased as the value of α is increased. In order to determine the strength of α, for example, a plurality of sets of the three-dimensional spectrum data and the supervised information for the calibration are received from the user and stored in the memory 112. Evaluation is performed with a calibration data while changing α, and while maintaining an accuracy of a predetermined or user-specified threshold value or more for the calibration data, α is automatically determined by such a method of adopting α that has the smallest number of effective wavelength bands or adopting the effective wavelength band of a threshold value or less and α that is the highest classification accuracy. Not limited to the Lasso regression, the hyperparameter can be automatically determined based on quantification/classification accuracy for the calibration data.

In addition, a method of determining the effective wavelength band in a case of using a fully connected layer or a support vector machine which is a type of neural network will be described. The fully connected layer and the support vector machine differ from the Lasso regression in a weight optimization method, but are the same as the Lasso regression in that the quantification/classification results are calculated according to Equation 1. Therefore, the effective wavelength band searching unit 605 sorts, for example, the weights of the quantification/classification model in descending order of the absolute values of the weights and determines the effective wavelength band by extracting the feature amount and the wavelength band corresponding to the higher weights. For example, a threshold value TH is prepared for determining the wavelength band to be adopted as the effective wavelength band, and the wavelength band corresponding to the weight having an absolute value exceeding the threshold value TH is adopted as the effective wavelength band. In addition, the method of determining the effective wavelength band is not limited to this. For example, a threshold value TH_{R} may be prepared for the order of the sorting result related to the absolute value, and the wavelength bands corresponding to the higher first weight up to the TH_{R}-th weight of the sorting result of the absolute value may be adopted as the effective wavelength band. A threshold value TH_{P} may be prepared for the ratio of the sorting results of the absolute values and the wavelength bands corresponding to the weights up to the higher TH_{P}% may be adopted. In addition, since the threshold values TH, TH_{R}, TH_{P}, and the like correspond to the hyperparameters for controlling the sparseness described above, the above-described automatic hyperparameter determination method can also be applied to the threshold values TH, TH_{R}, TH_{P}, and the like. It is noted that the quantification/classification model may be reupdated by using only the spectrum data corresponding to the adopted effective wavelength band.

By the above method, the effective wavelength band can be automatically determined based on the weight of the quantification/classification model.

In addition, the effective wavelength band searching unit 605 may automatically determine from which of the excitation wavelengths or the detection wavelengths the feature amount is to be extracted. As a determination method, there is a method by using the calibration data described above. By using the calibration data consisting of a plurality of sets of the three-dimensional spectrum data and the supervised information, the quantification/classification accuracy and the number of effective wavelength bands of the method of extracting feature amounts for each excitation wavelength and the method of extracting feature amounts for each detection wavelength are obtained, respectively. Which method to adopt is automatically determined based on the quantification/classification accuracy and the number of effective wavelength bands of both methods. As an automatic determination method, a method with the high quantification/classification accuracy may be adopted, a method with the quantification/classification accuracy of a predetermined or user-specified threshold value or more and with the smallest number of effective wavelength bands may be adopted, or a method with the highest quantification/classification accuracy and a predetermined or user-specified number of effective wavelength bands or less may be adopted.

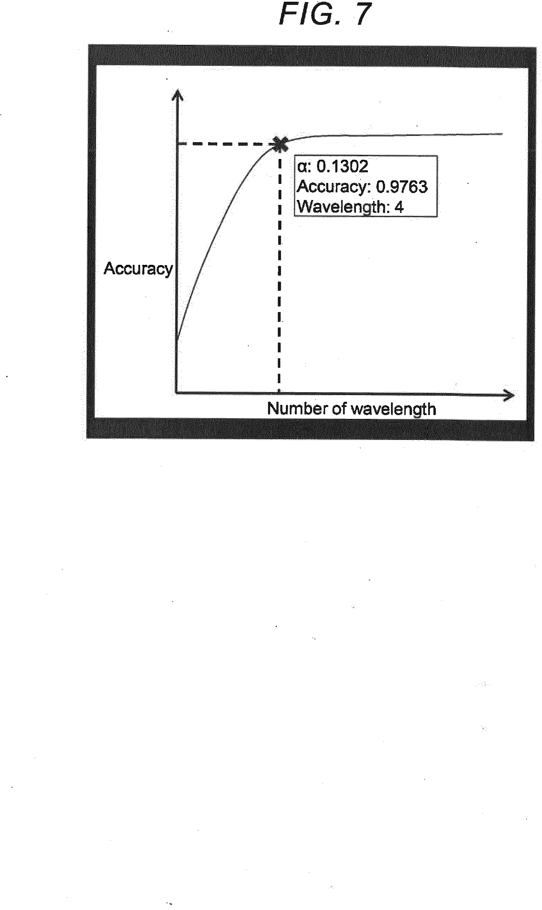

Next, a method of supporting the user to determine the effective wavelength band will be described. As described above, in order to construct the quantification/classification model, it is required to determine, for example, the hyperparameter for controlling sparseness and the feature amount extraction method. For example, in the Lasso regression, the regularization strength α as the hyperparameter is required to be determined. As described above, the larger the value of α, the smaller the number of effective wavelength bands, but the quantification/classification accuracy also tends to decrease. In order for the user to determine an appropriate α, necessary information is presented. For example, a graph illustrating a relationship between the number of effective wavelength bands and the quantification/classification accuracy as illustrated in FIG. 7 is generated by plotting the number of effective wavelength bands and the quantification/classification accuracy when the value of α is changed by using the calibration data described above and presented to the user through the output unit 604 described later. The example in FIG. 7 is a graph illustrating a relationship between the effective wavelength band and the quantification/classification accuracy in the Lasso regression, and it is assumed that the user selects one quantification/classification model from the graph by using a mouse or the like through the interface unit 110. The regularization strength α, the quantification/classification accuracy, and the number of effective wavelength bands in the selected quantification/classification model are displayed in "α", "Accuracy", and "Wavelength". Accordingly, the user can select a value of the hyperparameter in consideration of the required measurement time and the quantification/classification accuracy. In addition, by presenting a graph illustrating the relationship between the number of effective wavelength bands and the quantification/classification accuracy in both the case of extracting the feature amount for each excitation wavelength and the case of extracting the feature amount for each detection wavelength, it is possible to support the user in selecting from which of excitation wavelength or detection wavelength the feature amount is to be extracted. In addition, in some modes, by presenting to the user the quantification/classification accuracy in a case of adopting the quantification/classification model without the hyperparameter such as the regularization strength α, a case of extracting the feature amount for each excitation wavelength, and a case of extracting the feature amount for each detection wavelength, the user may be allowed to determine which of the feature amount extraction methods to use.

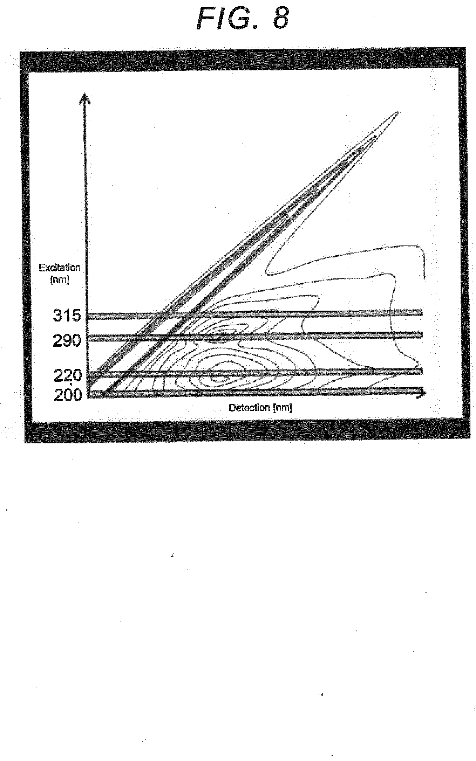

The output unit 604 displays the quantification/classification accuracy, the number of effective wavelength bands, the specific wavelength bands, and the like on the display device 122 through the interface unit 110. FIG. 8 illustrates an example of effective wavelength band display. In the example of FIG. 8, the excitation wavelengths of 200 nm, 220 nm, 290 nm, and 315 nm are selected as the effective wavelength bands. Further, as described above, a GUI illustrating the relationship between the effective wavelength band and the quantification/classification accuracy as illustrated in FIG. 7 may be presented to the user in order to support the determination of the effective wavelength band.

### [Fourth Embodiment]

In a fourth embodiment, described is a spectrum analysis system where the measurement time is shortened by searching for the effective wavelength bands in units of an excitation wavelength or a detection wavelength while realizing highly accurate quantification/classification of the three-dimensional spectrum data by using the spectrum analysis device 600 described in the third embodiment. The spectrum analysis system described in the fourth embodiment has two phases including a training phase of constructing the quantification/classification model by using a training data set provided by the user and searching for the effective wavelength band and an evaluation phase of measuring only the spectrum of the effective wavelength band specified in the training phase for the evaluation sample and performing the quantification/classification by using the quantification/classification model constructed in the training phase. Hereinafter, after describing the hardware configuration, the details will be described separately for each phase.

### <Hardware Configuration of Spectrum Analysis System 1000>

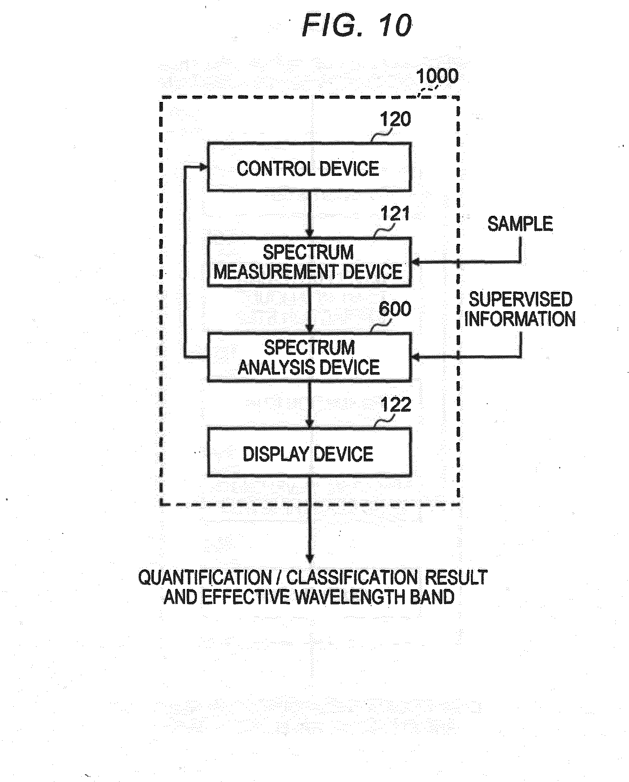

FIG. 10 illustrates a hardware configuration diagram according to the fourth embodiment. A spectrum analysis system 1000 according to the fourth embodiment includes the control device 120, the spectrum measurement device 121, the spectrum analysis device 600, and the display device 122.

The control device 120 sets the wavelength band of the excitation light with which the sample is irradiated and the detection wavelength band of the light reflected, transmitted, and absorbed by the sample in the spectrum measurement device 121 described later.

The spectrum measurement device 121 measures the spectra corresponding to the wavelengths set by the control device 120 for a training sample and an evaluation sample and inputs the discretized three-dimensional spectrum data to the spectrum analysis device 600.

The spectrum analysis device 600 is the spectrum analysis device described in the third embodiment, and in the training phase, constructs a training data from a set of the three-dimensional spectrum data of the training sample output by the spectrum measurement device 121 and the supervised information input by the user and performs generation of the quantification/classification model and the searching for the effective wavelength bands by using the training data set. In addition, in the evaluation phase, by using the quantification/classification model generated in the training phase, the quantification/classification is performed with an input of the three-dimensional spectrum data (evaluation data) of the evaluation sample output by the spectrum measurement device 121.

The display device 122 presents the effective wavelength band and the quantification/classification results output by the spectrum analysis device 600 to the user.

Each device operates differently in the training phase in which the quantification/classification model is constructed and the effective wavelength band is determined based on the training sample and the estimation phase in which the evaluation sample is quantified/classified. For this reason, the operation of each device will be described separately for the training phase and the estimation phase.

### <Operation of Each Device (Training Phase)>

In the spectrum analysis device 600, the control device 120 sets the wavelength band of the excitation light with which the training sample is irradiated and the detection wavelength band of reflected light, transmitted light, absorbed light, and the like detected from the sample. In the training phase, the entire excitation wavelength bands and the entire detection wavelength bands that can be candidates for the effective wavelength band are set as the measurement wavelength bands.

The spectrum measurement device 121 measures the spectrum of the training sample for obtaining the training data, acquires the discretized three-dimensional spectrum data, and inputs the discretized three-dimensional spectrum data to the spectrum analysis device 600.

The spectrum analysis device 600 receives the three-dimensional spectrum data and the supervised information for the three-dimensional spectrum data of the training sample measured by the spectrum measurement device 121 and stores the three-dimensional spectrum data and the supervised information in the memory 112 in the spectrum analysis device 600 as the training data set. The quantification/classification model is constructed by the method described in the second embodiment by using the training data set stored in the memory 112. Further, the effective wavelength band is determined automatically by the method described in the third embodiment, or the determination of the effective wavelength band is supported by presenting information to the user through the display device 122. The determined effective wavelength band is transmitted to the control device 120 and set as the excitation wavelength band or the detection wavelength band to be measured in the evaluation phase.

The display device 122 displays a GUI for presenting to the user the quantification/classification accuracy for the training data set output by the spectrum analysis device 600, the number of effective wavelength bands as illustrated in FIG. 8, the specific wavelength bands, and the like. Further, as described in the third embodiment, a GUI for supporting determination of the effective wavelength band as illustrated in FIG. 7 may be presented to the user.

### <Operation of Each Device (Evaluation Phase)>

The control device 120 sets the effective wavelength band output by the spectrum analysis device 600 in the training phase as the wavelength band of the excitation light with which the evaluation sample is irradiated and the wavelength band of reflected light, transmitted light, absorbed light, and the like detected from the sample.

The spectrum measurement device 121 measures the spectrum corresponding to the wavelength set by the control device 120 for the evaluation sample, acquires the discretized three-dimensional spectrum data by the same method as in the training phase, and inputs the discretized three-dimensional spectrum data to the spectrum analysis device 600.

The spectrum analysis device 600 receives the three-dimensional spectrum data of the evaluation sample measured by the spectrum measurement device 121 and performs the quantification/classification by the method described in the first embodiment by using the quantification/classification model constructed in the training phase.

The display device 122 presents the quantification/classification result of the evaluation sample output by the spectrum analysis device 600 to the user. In addition, the acquired spectrum may be visualized and displayed if necessary.

### <Modified Example>

In each embodiment, the input unit 201 (601, 1101) may perform an arbitrary preprocess on the three-dimensional spectrum data after receiving the discretized three-dimensional spectrum data. For example, centering and standardization process based on a statistic amount such as an average and a standard deviation for each wavelength band of a plurality of the spectrum data and frequency filtering such as a high-pass filter, a low-pass filter, a band-pass filter, or a linear/nonlinear function may be applied, and the detection intensity of a specific region such as the scattered light described above or the detection intensity of a value of a certain value or more may be replaced with a fixed value. In addition, such preprocess may be performed by the wavelength-unit feature amount extraction unit 202.

In the second embodiment, although the method of generating the quantification/classification model by using the user's own data has been described, with respect to the training data set provided by the user, the increasing of the training data set may be performed by using any data enrichment method. As the data enrichment methods, for example, the random noise may be assigned, the weighted linear summation of a plurality of the spectrum data may be performed, and value range may be varied. The quantification/classification model may be generated by adding an enriched data to the training data set, and the quantification/classification model may be generated by using only the enriched data. Further, more detailed evaluation may be performed by using the enriched data as the calibration data or by enriching the calibration data.

In each embodiment, the wavelength-unit feature amount extraction unit 202 may extract the feature amount by combining the two or more detection intensities input in units of an excitation wavelength or a detection wavelength and other information. For example, a differential value of the spectrum data, coordinate information (information on sets of the excitation wavelength and the detection wavelength) of each detection intensity, light absorption characteristics, experimental conditions, experimental environment, and the like may be combined.

In the second embodiment, although the method of generating a new quantification/classification model for the quantification/classification problem uniquely set by the user has been described, the calibration data separately from training data may be prepared, newly generated models and models already stored in the memory 112 may be evaluated, and which model to adopt may be determined based on an evaluation result. The evaluation result may include not only the quantification/classification result but also the number of effective wavelength bands, and the like. For example, a method of selecting a model with a predetermined quantification/classification accuracy or more and the lowest number of effective wavelength bands or a method of selecting a model with a predetermined number of effective wavelength bands or less and the highest quantification/classification accuracy may be used, or a method of performing the selection based on some index calculated from the quantification/classification accuracy and the number of effective wavelength bands may be used. Alternatively, the evaluation result may be presented to the user to determine which model to adopt.

In the third embodiment, although the method of searching for the effective wavelength band when the estimation unit 1103 constructs a new quantification/classification model has been described, the effective wavelength band by using the quantification/classification model stored in advance in the memory 112 may be searched for and, as illustrated in FIG. 8, the effective wavelength band may be presented to the user.

In the fourth embodiment, the method using the three-dimensional spectrum data measured by the spectrum measurement device 121 as the training data has been described, the three-dimensional spectrum data prepared in advance may be stored in the memory 112 and used as a portion of the training data.

In each embodiment, the input unit 201 (601, 1101) may receive the discretized three-dimensional spectrum data and, after that, perform an enlargement/reduction process according to a nearest neighbor interpolation method or a linear interpolation method. For example, in the fourth embodiment, in a case where, after the quantification/classification model is constructed by using the discretized EEM data 300 measured at intervals of 1 nm as the training data set, it is required to perform the quantification/classification on the evaluation data measured at intervals of 5 nm, the quantification/classification model generated from the training data set may be applied by the input unit 201 performing the enlargement process so that the height (the number of excitation wavelength bands) and the width (the number of detection wavelength bands) are five times the discretized EEM data 300 of the evaluation data. The same is true when performing the reduction process. It is noted that the enlargement/reduction process may be performed by the estimation unit 203 (1103). For example, in the example of the discretized EEM data 300, the estimation unit 203 (1103) may perform the enlargement process on the feature amount of the discretized EEM data 300 in units of an excitation wavelength or a detection wavelength obtained by the wavelength-unit feature amount extraction unit 202 so that the size in the direction of the wavelength band or the direction of the detection wavelength band becomes five times and apply the quantification/classification model generated from the training data set. The same is true when performing the reduction process.

As described above, the spectrum analysis device according to the invention includes the input unit 601, the wavelength-unit feature amount extraction unit 202, the estimation unit 1103, the output unit 604 and the effective wavelength band searching unit 605. The wavelength-unit feature amount extraction unit 202 uses a 1DCNN to extract a plurality of feature amounts for each excitation wavelength or each detection wavelength. The input unit 601 receives the effective wavelength band output by the effective wavelength band searching unit 605 and outputs only the spectrum corresponding to the effective wavelength band among the spectrum data received as the input to the wavelength-unit feature amount extraction unit 202.

With such a configuration and operation, it is possible to realize highly accurate quantification and/or classification with reduced influence of noise and limit the wavelength band used for quantification and/or classification in units of an excitation wavelength or a detection wavelength while utilizing the spatial information in the three-dimensional spectrum data is possible.

In addition, as disclosed in the second embodiment, the input unit 1101 receives the one or more sets of the spectrum data and the supervised information corresponding to the spectrum data, and the estimation unit 1103 can construct the quantification and/or classification model based on the feature amount extracted from the spectrum data by the wavelength-unit feature amount extraction unit 202 and the supervised information.

With such a configuration, a model used for quantification and classification can be appropriately constructed.

Further, as disclosed in the third embodiment, the effective wavelength band searching unit 605 that searches for the effective wavelength band which is the wavelength band corresponding to the feature amount used for the quantification and/or classification based on the parameter of the quantification and/or classification model obtained by the estimation unit 1103 is included in the spectrum analysis device according to the claimed invention.

The effective wavelength band searching unit 605 searches for the effective wavelength band in units of an excitation wavelength in a case where the wavelength-unit feature amount extraction unit 202 extracts the feature amount for each detection intensity of the two or more detection wavelength bands in each excitation wavelength band and in units of a detection wavelength in a case where the wavelength-unit feature amount extraction unit 202 extracts the feature amount for each detection intensity of the two or more excitation wavelength bands in each detection wavelength band. The output unit 604 outputs the effective wavelength band searched by the effective wavelength band searching unit 605 in addition to the estimation result.

According to such a configuration and operation, in addition to the results of the quantification and the classification, it is possible to obtain information on the wavelength band effective for the quantification and the classification.

Further, the wavelength-unit feature amount extraction unit 202 may extract the feature amount that can be commonly used for a plurality of the quantifications and/or the classifications by analyzing or learning a plurality of the training data sets.

According to such an operation, it is possible to obtain the feature amounts that can be commonly used for various types of estimation and to efficiently perform various types of estimation.

In addition, the effective wavelength band searching unit 605 acquires, as evaluation information, a quantification and/or classification accuracy and the number of effective wavelength bands in a case where the wavelength-unit feature amount extraction unit 202 extracts the feature amount for each detection intensity of the two or more detection wavelength bands in each excitation wavelength band and in a case where the wavelength-unit feature amount extraction unit 202 extracts the feature amount for each detection intensity of the two or more excitation wavelength bands in each detection wavelength band, and automatically determines the effective wavelength band based on the evaluation information or presents the evaluation information to the user to support the user in determining the effective wavelength band.

For this reason, the quantification and the classification can be efficiently performed by using an appropriate number of effective wavelength bands according to the desired classification accuracy.

Further, the effective wavelength band searching unit 605 acquires, as the evaluation information, the relationship between the quantification and/or classification accuracy and the number of effective wavelength bands in a case of changing the hyperparameter that affect the quantification and/or classification accuracy and the number of effective wavelength bands in the estimation unit 1103, automatically determines the value of the hyperparameter based on the evaluation information or presents the evaluation information to the user to support the user to determine the value of the hyperparameter.

For this reason, it is possible to appropriately set the hyperparameter according to the desired classification accuracy and to efficiently perform the quantification and the classification.

In addition, the input unit 601 receives the effective wavelength band output by the effective wavelength band searching unit 605, and among the spectrum data received as an input, only the spectrum corresponding to the effective wavelength band is output to the wavelength-unit feature amount extraction unit 202.

For this reason, by applying the effective wavelength band to the subsequent feature amount extraction process and the estimation process, efficiency improvement of the feature amount extraction process and the estimation process can be realized.

In addition, the spectrum analysis system according to the invention includes the control device 120, the spectrum measurement device 121, the spectrum analysis device 600 according to the invention, and the display device 122.

In this manner, a system having the spectrum analysis device can realize highly accurate quantification and/or classification with reduced influence of noise and limit the wavelength band used for the quantification and/or classification in units of an excitation wavelength or a detection wavelength while utilizing the spatial information in the three-dimensional spectrum data.

In addition, the spectrum analysis device 600 further includes the effective wavelength band searching unit 605 that searches for the effective wavelength band which is the wavelength band corresponding to the feature amount used for the quantification and/or classification based on the parameter of the quantification and/or classification model obtained by the estimation unit 1103. The effective wavelength band searching unit 605 searches for the effective wavelength band in units of an excitation wavelength in a case where the wavelength-unit feature amount extraction unit 202 extracts the feature amount for each detection intensity of the two or more detection wavelength bands in each excitation wavelength band and in units of a detection wavelength in a case where the wavelength-unit feature amount extraction unit 202 extracts the feature amount for each detection intensity of the two or more excitation wavelength bands in each detection wavelength band. The output unit 604 outputs the effective wavelength band searched by the effective wavelength band searching unit 605 in addition to the estimation result. The control device 120 receives the effective wavelength band output by the spectrum analysis device 600 and sets the effective wavelength band as the wavelength band of the excitation light with which the sample is irradiated or the wavelength band of the detection light to be detected.

According to such configuration and operation, the time required for spectrum measurement device 121 to acquire the spectrum data can be shortened.

It is noted that the invention is not limited to the above embodiments, and includes various modified examples falling under the scope of the claimed invention.

## Claims

1. A spectrum analysis device (600), comprising:
an input unit (601) configured for receiving spectrum data of a sample as an input;
a wavelength-unit feature amount extraction unit (202) configured for extracting a feature amount of the sample from the spectrum data;
an estimation unit (1103) configured for estimating characteristics of the sample based on the feature amount; and
an output unit (604) configured for outputting an estimation result obtained by the estimation unit (1103), wherein
the spectrum data includes a plurality of excitation wavelengths and spectroscopic spectra indicating detection wavelengths and detection intensities for the excitation wavelengths and is a discretized data with a predetermined wavelength width, wherein
the wavelength-unit feature amount extraction unit (202) is configured for extracting the feature amount from the detection intensities of two or more detection wavelength bands in each excitation wavelength band or the detection intensities of two or more excitation wavelength bands in each detection wavelength band, wherein
the wavelength-unit feature amount extraction unit (202) uses a 1-Dimensional Convolutional Neural Network, 1DCNN, to extract a plurality of feature amounts for each excitation wavelength or each detection wavelength, wherein
the estimation unit (1103) is configured to perform an estimation process of quantifying and/or classifying the characteristics of the sample, and wherein
the spectrum analysis device is further comprising:
an effective wavelength band searching unit (605) configured for searching for an effective wavelength band that is a wavelength band corresponding to the feature amount used for the quantification and/or classification based on a parameter of the quantification and/or classification model obtained by the estimation unit (1103), wherein
the effective wavelength band searching unit (605) is configured to search for the effective wavelength band in units of an excitation wavelength in a case where the wavelength-unit feature amount extraction unit (202) extracts the feature amount for each detection intensity of the two or more detection wavelength bands in each excitation wavelength band and in units of a detection wavelength in a case where the wavelength-unit feature amount extraction unit (202) extracts the feature amount for each detection intensity of two or more excitation wavelength bands in each detection wavelength band, wherein
the input unit (601) is configured to receive the effective wavelength band output by the effective wavelength band searching unit (605) and to output only the spectrum corresponding to the effective wavelength band among the spectrum data received as the input to the wavelength-unit feature amount extraction unit (202), and
the output unit (604) is configured to output the effective wavelength band searched by the effective wavelength band searching unit (605) in addition to the estimation result.

2. The spectrum analysis device (600) according to claim 1, wherein
the input unit (601) is configured to receive one or more sets of the spectrum data and supervised information corresponding to the spectrum data, and wherein
the estimation unit (1103) is configured to construct a quantification and/or classification model based on the feature amount extracted from the spectrum data by the wavelength-unit feature amount extraction unit (202) and the supervised information.

3. The spectrum analysis device (600) according to any one of claims 1 to 2, wherein
the wavelength-unit feature amount extraction unit (202) is configured to analyze or to learn a plurality of training data sets to extract a feature amount that can be used in common for a plurality of quantifications and/or classifications.

4. A spectrum analysis method comprising:
receiving (901) spectrum data of a sample as an input;
extracting (502) a feature amount of the sample from the spectrum data; estimating (1203) characteristics of the sample based on the feature amount; and
outputting (904) an estimation result obtained by the estimating, wherein
the spectrum data includes a plurality of excitation wavelengths and spectroscopic spectra indicating detection wavelengths and detection intensities for the excitation wavelengths and is discretized data with a predetermined wavelength width, wherein,
in the extracting (502), the feature amount is extracted from the detection intensities of two or more detection wavelength bands in each excitation wavelength band or the detection intensities of two or more excitation wavelength bands in each detection wavelength band, wherein
the extracting (502) uses a 1-Dimensional Convolutional Neural Network, 1DCNN, to extract a plurality of feature amounts for each excitation wavelength or each detection wavelength, wherein,
in the estimating (1203), an estimation process of quantifying and/or classifying the characteristics of the sample is performed, and wherein
the spectrum analysis method is further comprising:
searching (905) for an effective wavelength band which is a wavelength band corresponding to the feature amount used for the quantification and/or classification based on a parameter of a quantification and/or classification model obtained in the estimating, wherein,
in the searching (905), the effective wavelength band is searched for in units of an excitation wavelength in a case where, in the extracting, the feature amount is extracted for each detection intensity of the two or more detection wavelength bands in each excitation wavelength band and in units of a detection wavelength in a case where, in the extracting, the feature amount is extracted for each detection intensity of the two or more excitation wavelength bands in each detection wavelength band, wherein
in the receiving (901), the effective wavelength band output by the searching is received, and only the spectrum corresponding to the effective wavelength band among the spectrum data received as the input is output to the extracting step, and,
in the outputting (904), the effective wavelength band searched in the searching is output in addition to the estimation result.

5. The spectrum analysis method according to claim 4, wherein,
in the receiving (901), one or more sets of the spectrum data and supervised information corresponding to the spectrum data is received, and wherein,
in the estimating (1203), a quantification and/or classification model is constructed based on the feature amount extracted from the spectrum data in the extracting (502) and the supervised information.

6. The spectrum analysis method according to any one of claims 4 to 5, wherein,
in the extracting (502), the feature amount that can be used in common for a plurality of the quantifications and/or the classifications is extracted by analyzing or learning a plurality of training data sets.

7. A spectrum analysis system (1000), comprising:
a control device (120) configured for setting a wavelength band of an excitation light with which the sample is irradiated and a wavelength band of a detection light;
a spectrum measurement device (121) configured for measuring a spectrum data corresponding to the wavelength band set in the control device (120) for the sample;
a spectrum analysis device (600) according to claim 1 and configured for analyzing the spectrum data measured by the spectrum measurement device (121); and
a display device (122) displaying an estimation result obtained by the spectrum analysis device (600).

8. The spectrum analysis system according to claim 7, wherein
the control device (120) is configured to receive the effective wavelength band output from the spectrum analysis device (600) and sets the effective wavelength band as the wavelength band of the excitation light with which the sample is irradiated or the wavelength band of the detection light to be detected.

## Patentansprüche

1. Spektrumanalysevorrichtung (600), die umfasst:
eine Eingabeeinheit (601), die konfiguriert ist, Spektrumdaten einer Probe als eine Eingabe zu empfangen;
eine Einheit (202) für die Extraktion eines Merkmalsbetrags für eine Wellenlängeneinheit, die konfiguriert ist, einen Merkmalsbetrag der Probe aus den Spektrumdaten zu extrahieren;
eine Schätzeinheit (1103), die konfiguriert ist, Eigenschaften der Probe anhand des Merkmalsbetrags zu schätzen; und
eine Ausgabeeinheit (604), die konfiguriert ist, ein Schätzergebnis auszugeben, das durch die Schätzeinheit (1103) erhalten wird, wobei
die Spektrumdaten mehrere Anregungswellenlängen und spektroskopische Spektren, die Detektionswellenlängen und Detektionsstärken für die Anregungswellenlängen angeben, enthalten und diskretisierte Daten mit einer vorgegebenen Wellenlängenbreite sind, wobei
die Einheit (202) für die Extraktion eines Merkmalsbetrags für eine Wellenlängeneinheit konfiguriert ist, den Merkmalsbetrag aus den Detektionsstärken zweier oder mehrerer Detektionswellenlängenbänder in jedem Anregungswellenlängenband oder den Detektionsstärken zweier oder mehrerer Anregungswellenlängenbänder in jedem Detektionswellenlängenband zu extrahieren, wobei
die Einheit (202) für die Extraktion eines Merkmalsbetrags für eine Wellenlängeneinheit ein 1-dimensionales neuronales Faltungsnetz, 1DCNN, verwendet, um mehrerer Merkmalsbeträge für jede Anregungswellenlänge oder jede Detektionswellenlänge zu extrahieren, wobei
die Schätzeinheit (1103) konfiguriert ist, einen Schätzvorgang des Quantifizierens und/oder Einordnens der Eigenschaften der Probe auszuführen, und wobei
die Spektrumanalysevorrichtung ferner umfasst:
eine Einheit (605) für die Suche nach dem effektiven Wellenlängenband, die konfiguriert ist, anhand eines Parameters des Quantifizierungs- und/oder Einordnungsmodells, der durch die Schätzeinheit (1103) erhalten wird, nach einem effektiven Wellenlängenband zu suchen, das ein Wellenlängenband ist, das dem Merkmalsbetrag entspricht, der für die Quantifizierung und/oder die Einordnung verwendet wird, wobei
die Einheit (605) für die Suche nach dem effektiven Wellenlängenband konfiguriert ist, nach dem effektiven Wellenlängenband in Einheiten einer Anregungswellenlänge zu suchen, falls die Einheit (202) für die Extraktion eines Merkmalsbetrags für eine Wellenlängeneinheit den Merkmalsbetrag für jede Detektionsstärke der zwei oder mehr Detektionswellenlängenbänder in jedem Anregungswellenlängenband extrahiert, und in Einheiten einer Detektionswellenlänge zu suchen, falls die Einheit zur Extraktion eines Merkmalbetrags einer Wellenlängeneinheit (202) den Merkmalsbetrag für jede Detektionsstärke von zwei oder mehr Anregungswellenlängenbändern in jedem Detektionswellenlängenband extrahiert, wobei
die Eingabeeinheit (601) konfiguriert ist, das effektive Wellenlängenband, das durch die Einheit (605) für die Suche nach dem effektiven Wellenlängenband ausgegeben wird, zu empfangen und nur das Spektrum, das dem effektiven Wellenlängenband entspricht, unter den Spektrumdaten, die als die Eingabe in die Einheit (202) für die Extraktion eines Merkmalsbetrags für eine Wellenlängeneinheit empfangen werden, auszugeben, und
die Ausgabeeinheit (604) konfiguriert ist, das durch die Einheit (605) für die Suche nach dem effektiven Wellenlängenband gesuchte effektive Wellenlängenband zusätzlich zu dem Schätzergebnis auszugeben.

2. Spektrumanalysevorrichtung (600) nach Anspruch 1, wobei
die Eingabeeinheit (601) konfiguriert ist, eine oder mehrere Gruppen der Spektrumdaten und überwachte Informationen, die den Spektrumdaten entsprechen, zu empfangen, und wobei
die Schätzeinheit (1103) konfiguriert ist, ein Quantifizierungs- und/oder Einordnungsmodell anhand des aus den Spektrumdaten durch die Einheit (202) für die Extraktion eines Merkmalsbetrags für eine Wellenlängeneinheit extrahierten Merkmalsbetrags und der überwachten Informationen zu erstellen.

3. Spektrumanalysevorrichtung (600) nach einem der Ansprüche 1 bis 2, wobei
die Einheit (202) für die Extraktion eines Merkmalsbetrags für eine Wellenlängeneinheit konfiguriert ist, mehrere Schulungsdatengruppen zu analysieren oder zu lernen, um einen Merkmalsbetrag zu extrahieren, der gemeinsam für mehrere Quantifizierungen und/oder Einordnungen verwendet werden kann.

4. Spektrumanalyseverfahren, das umfasst:
Empfangen (901) von Spektrumdaten einer Probe als eine Eingabe;
Extrahieren (502) eines Merkmalsbetrags der Probe aus den Spektrumdaten;
Schätzen (1203) von Eigenschaften der Probe anhand des Merkmalsbetrags; und
Ausgeben (904) eines Schätzergebnisses, das durch die Schätzung erhalten wird, wobei
die Spektrumdaten mehrere Anregungswellenlängen und spektroskopische Daten, die Detektionswellenlängen und Detektionsstärken für die Anregungswellenlängen angeben, enthalten und diskretisierte Daten mit einer vorgegebenen Wellenlängenbreite sind, wobei
beim Extrahieren (502) der Merkmalsbetrag aus den Detektionsstärken zweier oder mehrerer Detektionswellenlängenbänder in jedem Anregungswellenlängenband oder den Detektionsstärken zweier oder mehrerer Anregungswellenlängenbänder in jedem Detektionswellenlängenband extrahiert wird, wobei
das Extrahieren (502) ein 1-dimensionales neuronales Faltungsnetz, 1DCNN, verwendet, um mehrere Merkmalsbeträge für jede Anregungswellenlänge oder jede Detektionswellenlänge zu extrahieren, wobei
beim Schätzen (1203) ein Schätzvorgang des Quantifizierens und/oder Einordnens der Eigenschaften der Probe ausgeführt wird, und wobei
das Spektrumanalyseverfahren ferner umfasst:
Suchen (905) nach einem effektiven Wellenlängenband, das ein Wellenlängenband ist, das dem Merkmalsbetrag entspricht, der für die Quantifizierung und/oder Einordnung verwendet wird, anhand eines Parameters eines Quantifizierungs- oder Einordnungsmodells, der beim Schätzen erhalten wird, wobei
beim Suchen (905) nach dem effektiven Wellenlängenband in Einheiten einer Anregungswellenlänge gesucht wird, falls beim Extrahieren der Merkmalsbetrag für jede Detektionsstärke der zwei oder mehr Detektionswellenlängenbänder in jedem Anregungswellenlängenband extrahiert wird, und in Einheiten einer Detektionswellenlänge gesucht wird, falls beim Extrahieren der Merkmalsbetrag für jede Detektionsstärke der zwei oder mehr Anregungswellenlängenbänder in jedem Detektionswellenlängenband extrahiert wird, wobei
beim Empfangen (901) das effektive Wellenlängenband, das durch das Suchen ausgegeben wird, empfangen wird und nur das Spektrum, das dem effektiven Wellenlängenband entspricht, unter den Spektrumdaten, die als die Eingabe empfangen werden, an den Extraktionsschritt ausgegeben wird, und
beim Ausgeben (904) das effektive Wellenlängenband, nach dem beim Suchen gesucht wird, zusätzlich zu dem Schätzergebnis ausgegeben wird.

5. Spektrumanalyseverfahren nach Anspruch 4, wobei
beim Empfangen (901) eine oder mehrere Gruppen der Spektrumdaten und die überwachten Informationen, die den Spektrumdaten entsprechen, empfangen werden und wobei
beim Schätzen (1203) ein Quantifizierungs- und/oder Einordnungsmodell anhand des aus den Spektrumdaten beim Extrahieren (502) extrahierten Merkmalsbetrag und der überwachten Informationen erstellt wird.

6. Spektrumanalyseverfahren nach einem der Ansprüche 4 bis 5, wobei
beim Extrahieren (502) der Merkmalsbetrag, der gemeinsam für mehrere der Quantifizierungen und/oder der Einordnungen verwendet werden kann, durch Analysieren oder Lernen mehrerer Schulungsdatengruppen extrahiert wird.

7. Spektrumanalysesystem (1000), das umfasst:
eine Steuervorrichtung (120), die konfiguriert ist, ein Wellenlängenband eines Anregungslichts, mit dem die Probe bestrahlt wird, und ein Wellenlängenband eines Detektionslichts einzustellen;
eine Spektrummessvorrichtung (121), die konfiguriert ist, Spektrumdaten zu messen, die dem Wellenlängenband entsprechen, das in der Steuervorrichtung (120) für die Probe eingestellt ist;
eine Spektrumanalysevorrichtung (600) nach Anspruch 1, die konfiguriert ist, die durch die Spektrummessvorrichtung (121) gemessenen Spektrumdaten zu analysieren; und
eine Anzeigevorrichtung (122), die ein Schätzergebnis anzeigt, das durch die Spektrumanalysevorrichtung (600) erhalten wird.

8. Spektrumanalysesystem nach Anspruch 7, wobei
die Steuervorrichtung (120) konfiguriert ist, das effektive Wellenlängenband, das von der Spektrumanalysevorrichtung (600) ausgegeben wird, zu empfangen und das effektive Wellenlängenband als das Wellenlängenband des Anregungslichts, mit dem die Probe bestrahlt wird, oder das Wellenlängenband des zu detektierenden Detektionslichts einstellt.

## Revendications

1. Dispositif d'analyse spectrale (600), comprenant :
une unité d'entrée (601) configurée pour recevoir des données spectrales d'un échantillon à titre d'entrées ;
une unité d'extraction de valeur caractéristique d'unité de longueur d'onde (202) configurée pour extraire une valeur caractéristique de l'échantillon à partir des données spectrales ;
une unité d'estimation (1103) configurée pour estimer des caractéristiques de l'échantillon sur la base de la valeur caractéristique ; et
une unité de sortie (604) configurée pour sortir un résultat d'estimation obtenu par l'unité d'estimation (1103), dans lequel
les données spectrales incluent une pluralité de longueurs d'onde d'excitation et de spectres spectroscopiques indiquant des longueurs d'onde de détection et des intensités de détection pour les longueurs d'onde d'excitation, et sont des données discrétisées avec une largeur de longueur d'onde prédéterminée, dans lequel
l'unité d'extraction de valeur caractéristique d'unité de longueur d'onde (202) est configurée pour extraire la valeur caractéristique à partir des intensités de détection de deux ou plusieurs bandes de longueurs d'onde de détection dans chaque bande de longueurs d'onde d'excitation ou à partir des intensités de détection de deux ou plusieurs bandes de longueurs d'onde d'excitation dans chaque bande de longueurs d'onde de détection, dans lequel
l'unité d'extraction de valeur caractéristique d'unité de longueur d'onde (202) utilise un réseau de neurones convolutif unidimensionnel, 1DCNN, pour extraire une pluralité de valeurs caractéristiques pour chaque longueur d'onde d'excitation ou chaque longueur d'onde de détection, dans lequel l'unité d'estimation (1103) est configurée pour effectuer un processus d'estimation consistant à quantifier et/ou classifier les caractéristiques de l'échantillon, et dans lequel
le dispositif d'analyse spectrale comprend en outre :
une unité de recherche de bande de longueurs d'onde efficace (605) configurée pour rechercher une bande de longueurs d'onde efficace qui est une bande de longueurs d'onde correspondant à la valeur caractéristique utilisée pour la quantification et/ou classification sur la base d'un paramètre d'un modèle de la quantification et/ou classification obtenu par l'unité d'estimation (1103), dans lequel
l'unité de recherche de bande de longueurs d'onde efficace (605) est configurée pour rechercher la bande de longueurs d'onde efficace dans des unités d'une longueur d'onde d'excitation dans un cas où l'unité d'extraction de valeur caractéristique d'unité de longueur d'onde (202) extrait la valeur caractéristique pour chaque intensité de détection desdites deux ou plusieurs bandes de longueurs d'onde de détection dans chaque bande de longueurs d'onde d'excitation, et dans des unités d'une longueur d'onde de détection dans un cas où l'unité d'extraction de valeur caractéristique d'unité de longueur d'onde (202) extrait la valeur caractéristique pour chaque intensité de détection de deux ou plusieurs bandes de longueurs d'onde d'excitation dans chaque bande de longueurs d'onde de détection, dans lequel
l'unité d'entrée (601) est configurée pour recevoir la bande de longueurs d'onde efficace sortie par l'unité de recherche de bande de longueurs d'onde efficace (605), et pour sortir uniquement le spectre correspondant à la bande de longueurs d'onde efficace parmi les données spectrales reçues à titre d'entrées vers l'unité d'extraction de valeur caractéristique d'unité de longueur d'onde (202), et
l'unité de sortie (604) est configurée pour sortir la bande de longueurs d'onde efficace recherchée par l'unité de recherche de bande de longueurs d'onde efficace (605) en addition au résultat d'estimation.

2. Dispositif d'analyse spectrale (600) selon la revendication 1, dans lequel
l'unité d'entrée (601) est configurée pour recevoir un ou plusieurs ensemble des données spectrales et d'informations supervisées correspondant aux données spectrales, et dans lequel
l'unité d'estimation (1103) est configurée pour construire un modèle de quantification et/ou classification sur la base de la valeur caractéristique extraite à partir des données spectrales par l'unité d'extraction de valeur caractéristique d'unité de longueur d'onde (202) et des informations supervisées.

3. Dispositif d'analyse spectrale (600) selon l'une quelconque des revendications 1 à 2, dans lequel
l'unité d'extraction de valeur caractéristique d'unité de longueur d'onde (202) est configurée pour analyser ou apprendre une pluralité d'ensembles de données d'entraînement pour extraire une valeur caractéristique qui peut être utilisée en commun pour une pluralité de quantifications et/ou classifications.

4. Procédé d'analyse spectrale comprenant les étapes consistant à :
recevoir (901) des données spectrales d'un échantillon à titre d'entrées ;
extraire (502) une valeur caractéristique de l'échantillon à partir des données spectrales,
estimer (1203) des caractéristiques de l'échantillon sur la base de la valeur caractéristique ; et
sortir (904) un résultat d'estimation obtenu via l'étape d'estimation, dans lequel
les données spectrales incluent une pluralité de longueurs d'onde d'excitation et de spectres spectroscopiques indiquant des longueurs d'onde de détection et des intensités de détection pour les longueurs d'onde d'excitation, et sont des données discrétisées avec une largeur de longueur d'onde prédéterminée, dans lequel
dans l'étape d'extraction (502), la valeur caractéristique est extraite à partir des intensités de détection de deux ou plusieurs bandes de longueurs d'onde de détection dans chaque bande de longueurs d'onde d'excitation, ou des intensités de détection de deux ou plusieurs bandes de longueurs d'onde d'excitation dans chaque bande de longueurs d'onde de détection, dans lequel
l'étape d'extraction (502) utilise un réseau de neurones convolutif unidimensionnel, 1DCNN, pour extraire une pluralité de valeurs caractéristiques pour chaque longueur d'onde d'excitation ou chaque longueur d'onde de détection, dans lequel
dans l'étape d'estimation (1203), un processus d'estimation consistant à quantifier et/ou classifier les caractéristiques de l'échantillon est effectué, et dans lequel
le procédé d'analyse spectrale comprend en outre les étapes consistant à :
rechercher (905) une bande de longueurs d'onde efficace qui est une bande de longueurs d'onde correspondant à la valeur caractéristique utilisée pour la quantification et/ou classification sur la base d'un paramètre d'un modèle de quantification et/ou classification obtenu dans l'étape d'estimation, dans lequel
dans l'étape de recherche (905), la bande de longueurs d'onde efficace est recherchée dans des unités d'une longueur d'onde d'excitation dans un cas où, dans l'étape d'extraction, la valeur caractéristique est extraite pour chaque intensité de détection de deux ou plusieurs bandes de longueurs d'onde de détection dans chaque bande de longueurs d'onde d'excitation, et dans des unités d'une longueur d'onde de détection dans un cas où, dans l'étape d'extraction, la valeur caractéristique est extraite pour chaque intensité de détection de deux ou plusieurs bandes de longueurs d'onde d'excitation dans chaque bande de longueurs d'onde de détection, dans lequel
dans l'étape de réception (901), la bande de longueurs d'onde efficace sortie via l'étape de recherche est reçue, et uniquement le spectre correspondant à la bande de longueurs d'onde efficace parmi les données spectrales reçues à titre d'entrées est sorti pour l'étape d'extraction, et
dans l'étape de sortie (904), la bande de longueurs d'onde efficace recherchée dans l'étape de recherche est sortie en addition au résultat d'estimation.

5. Procédé d'analyse spectrale selon la revendication 4, dans lequel
dans l'étape de réception (901), un ou plusieurs ensemble des données spectrales et des informations supervisées correspondant aux données spectrales sont reçus, et dans lequel
dans l'étape d'estimation (1203), un modèle de quantification et/ou classification est construit sur la base de la valeur caractéristique extraite à partir des données spectrales dans l'étape d'extraction (502) et des informations supervisées.

6. Procédé d'analyse spectrale selon l'une quelconque des revendications 4 à 5, dans lequel
dans l'étape extraction (502), la valeur caractéristique qui peut être utilisée en commun pour une pluralité des quantifications et/ou des classifications est extraite en analysant ou apprenant une pluralité d'ensembles de données d'entraînement.

7. Système d'analyse spectrale (1000) comprenant :
un dispositif de commande (120) configuré pour définir une bande de longueurs d'onde d'une lumière d'excitation avec laquelle l'échantillon est irradié et une bande de longueurs d'onde d'une lumière de détection ;
un dispositif de mesurage spectral (121) configuré pour mesurer des données spectrales correspondant à la bande de longueurs d'onde définie dans le dispositif de commande (120) pour l'échantillon ;
un dispositif d'analyse spectrale (600) selon la revendication 1 et configuré pour analyser les données spectrales mesurées par le dispositif de mesurage spectral (121) ; et
un dispositif d'affichage (122) affichant un résultat d'estimation obtenu par le dispositif d'analyse spectrale (600).

8. Système d'analyse spectrale selon la revendication 7, dans lequel
le dispositif de commande (120) est configuré pour recevoir la bande de longueurs d'onde efficace sortie depuis le dispositif d'analyse spectrale (600), et définit la bande de longueurs d'onde efficace à titre de bande de longueurs d'onde de la lumière d'excitation avec laquelle l'échantillon est irradié ou de bande de longueurs d'onde de la lumière de détection qu'il s'agit de détecter.
